# EUROPÄISCHE PATENTSCHRIFT

(11) **EP 0 967 109 B1**
(45) Veröffentlichungstag und Bekanntmachung des Hinweises auf die Patenterteilung: **17.09.2008**
(21) Anmeldenummer: 99111511.4
(22) Anmeldetag: 14.06.1999
(51) Int. Cl.: B60M 3/00, H02M 5/27

(54) **Unterwerk zur Speisung zweier Streckenabschnitte eines elektrifizierten Eisenbahnnetzes**
Substation for power supply to two sections of an electrified railway network
Sous-station pour l'alimentation de deux sections d'un réseau électrifié de chemin de fer

(30) Priorität: 25.06.1998 DE 19828404
(43) Veröffentlichungstag der Anmeldung: 29.12.1999
(73) Patentinhaber: SIEMENS AKTIENGESELLSCHAFT, 80333 München (DE)
(72) Erfinder: Gruber, Rainer Dr., 91560 Heilsbronn (DE); Schuster, Roland Dipl.-Ing., 91096 Möhrendorf (DE)

(56) Entgegenhaltungen:
- DE-A- 2 746 588
- DE-A- 3 213 778
- US-A- 1 647 348
- KNESCHKE: "Control of utility system unbalance caused by single-phase electric traction" IEEE TRANSACTIONS ON INDUSTRIAL APPLICATIONS, Bd. 21, Nr. 6, November 1985 (1985-11), Seiten 1559-1569, XP002116759 New York, USA

## Beschreibung

Die vorliegende Erfindung betrifft ein Unterwerk zur Speisung eines ersten und eines zweiten Streckenabschnitts eines elektrifizierten Eisenbahnnetzes mit elektrischer Energie aus einem Drehstromnetz mit drei Phasen nach dem Oberbegriff des Patentanspruchs 1.

Beim Anschluß von einphasigen Eisenbahnlasten an ein dreiphasiges Drehstromnetz ergeben sich erhebliche Unsymmetrien. Zur Verringerung bzw. Vermeidung dieser Unsymmetrien sind verschiedene Möglichkeiten bekannt.

Die einfachste Möglichkeit besteht darin, das Eisenbahnnetz in mehrere galvanisch getrennte Streckenabschnitte zu unterteilen. Jeder Streckenabschnitt wird dann von einem eigenen Unterwerk gespeist. Aus Redundanzgründen sind dabei in jedem Unterwerk meist zwei Transformatoren vorhanden. Die Transformatoren eines Unterwerks werden an zwei Phasen des dreiphasigen Drehstromnetzes angeschlossen. In drei aufeinanderfolgenden Unterwerken werden die Transformatoren an unterschiedlich verkettete Spannungen angeschlossen. Zwischen den Unterwerken ergibt sich damit eine Phasentrennstelle. Mit dieser Schaltung wird die Last im Gesamtnetz symmetriert. Innerhalb des Unterwerks bleibt die Unsymmetrie allerdings erhalten.

Eine weitere Möglichkeit zur Reduktion der Unsymmetrien bietet die sog. V-Schaltung. Bei ihr speist ein Unterwerk mit zwei Transformatoren zwei elektrisch voneinander isolierte Streckenabschnitte. Die beiden Transformatoren sind an unterschiedlich verkettete Spannungen angeschlossen. Dadurch entsteht innerhalb des Unterwerks eine weitere Phasentrennstelle. Mit dieser Schaltung kann die Unsymmetrie auf die Hälfte reduziert werden, wenn die Last in beiden Abschnitten gleichgroß ist. Das zyklische Vertauschen der Phasen über aufeinanderfolgende Unterwerke bleibt erhalten.

Ein derartiges Unterwerk, bei dem zur Reduktion von Unsymmetrien den Transformatoren eine induktive und eine kapazitive Last zugeschaltet sind, ist aus Kneschke: "Control of Utility System Unbalance Caused by Single-Phase Electric Traction" in IEEE Transactions on Industry Applications, Bd. 21, Nr. 6, November 1985, Seiten 1559 bis 1569 bekannt.

Gemäß der DE 32 13 778 A1 sind zur Vermeidung von Rückwirkungen dem Unterwerk Direktumrichter zugeordnet. Gemäß der DE 27 46 588 dienen Induktivität und Kapazität zur Glättung der Spannung. Aus der US 1 647 348 ist eine Vorrichtung zur Einspeisung elektrischer Energie aus einem Drehstromnetz über Transformatoren in die Oberleitung der Eisenbahn bekannt.

Die Aufgabe der vorliegenden Erfindung besteht darin, ein derartiges Unterwerk derart weiterzuentwickeln, daß mit geringen Kosten eine geringere Unsymmetrie in der Belastung des Drehstromnetzes erreicht wird.

Die Aufgabe wird in Verbindung mit dem Oberbegriff durch die Kombination der kennzeichnenden Merkmale des Patentanspruches 1 gelöst.

Vorteilhafte Ausgestaltungen des Unterwerks sind den Unteransprüchen zu entnehmen.

Die Variabilität der induktiven und/oder der kapazitiven Last kann dabei stufenweise oder kontinuierlich sein. Insbesondere kann die induktive Last z.B. mittels einer Phasenanschnittssteuerung einer der induktiven Last zugeordneten Thyristoreinheit kontinuierlich variabel gestaltet sein. Ebenso kann auch die kapazitive Last mittels einer Phasenanschnittssteuerung einer der kapazitiven Last zugeordneten Thyristoreinheit kontinuierlich variabel gestaltet sein.

Eine kapazitive Last ist in der Regel nur schwer kontinuierlich variierbar. Vorzugsweise wird eine kontinuierliche Variabilität der kapazitiven Last daher dadurch erreicht, dass die kapazitive Last aus einer kapazitiven Grundlast und einer parallel oder in Serie zur kapazitiven Grundlast angeordneten induktiven Zusatzlast besteht, dass die kapazitive Grundlast invariabel oder nur in Stufen variabel ist und dass die kapazitive Last durch Variieren der induktiven Zusatzlast variabel ist.

Weitere Vorteile und Einzelheiten ergeben sich aus der nachfolgenden Beschreibung eines Ausführungsbeispiels. Dabei zeigen in Prinzipdarstellung:
- Fig. 1: ein Unterwerk,
- Fig. 2: eine induktive Last und
- Fig. 3: eine kapazitive Last.

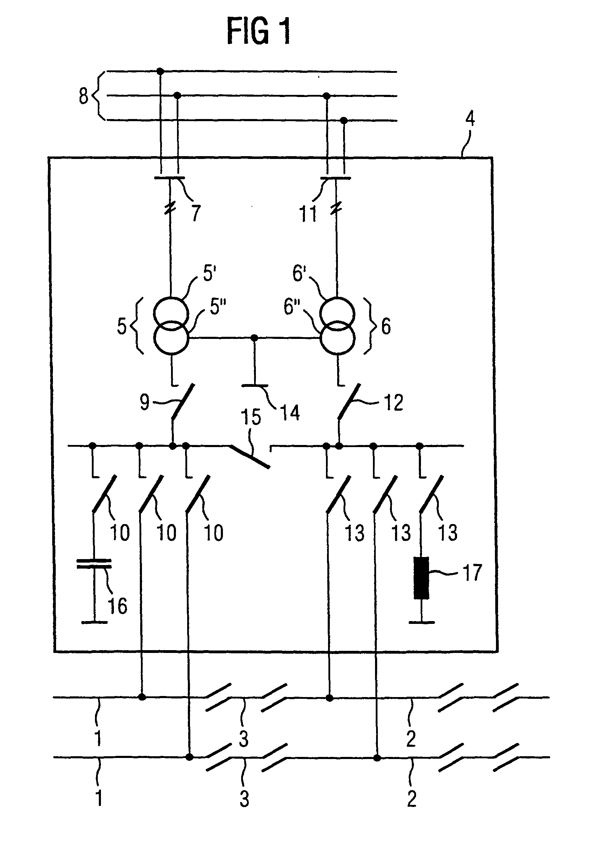

Gemäß Fig. 1 sollen zwei Streckenabschnitte 1, 2 eines elektrischen Eisenbahnnetzes mit elektrischer Energie gespeist werden. Die zwei Streckenabschnitte 1, 2 sind in der Regel im Eisenbahnnetz aufeinanderfolgend angeordnet. Sie sind über eine neutrale Zone 3 elektrisch voneinander isoliert.

Zur Speisung der Streckenabschnitte 1, 2 weist ein Unterwerk 4 zwei Transformatoren 5, 6 mit Primärseiten 5', 6' und Sekundärseiten 5", 6" auf. Die Primärseite 5' des einen Transformators 5 ist über einen ersten Netzschalter 7 an eine erste Phase und eine zweite Phase eines Drehstromnetzes 8 anschaltbar. Die Sekundärseite 5" des Transformators 5 ist über einen ersten Hauptschalter 9 und Unterschalter 10 an den ersten Streckenabschnitt 1 anschaltbar. Ebenso ist die Primärseite 6' des anderen Transformators 6 über einen zweiten Netzschalter 11 an die zweite Phase und eine dritte Phase des Drehstromnetzes 8 anschaltbar. Die Sekundärseite 6" dieses Transformators 6 ist über einen zweiten Hauptschalter 12 und zweite Unterschalter 13 an den zweiten Streckenabschnitt 2 anschaltbar.

Die Sekundärseiten 5", 6" der Transformatoren 5, 6 weisen einen gemeinsamen Erdungspunkt 14 auf. Ferner sind die beiden Streckenabschnitte 1, 2 über einen Koppelschalter 15 miteinander verbindbar. Wenn z. B. der eine Transformator 5 ausfällt, wird der erste Hauptschalter 9 geöffnet und der Koppelschalter 15 geschlossen.

Zum Ausgleich unsymmetrischer Belastungen des Drehstromnetzes 8 ist an den ersten Transformator 5 eine kapazitive Last 16 und an den zweiten Transformator 6 eine induktive Last 17 anschaltbar. Die kapazitive Last 16 und die induktive Last 17 sind dabei sekundärseitig angeordnet.

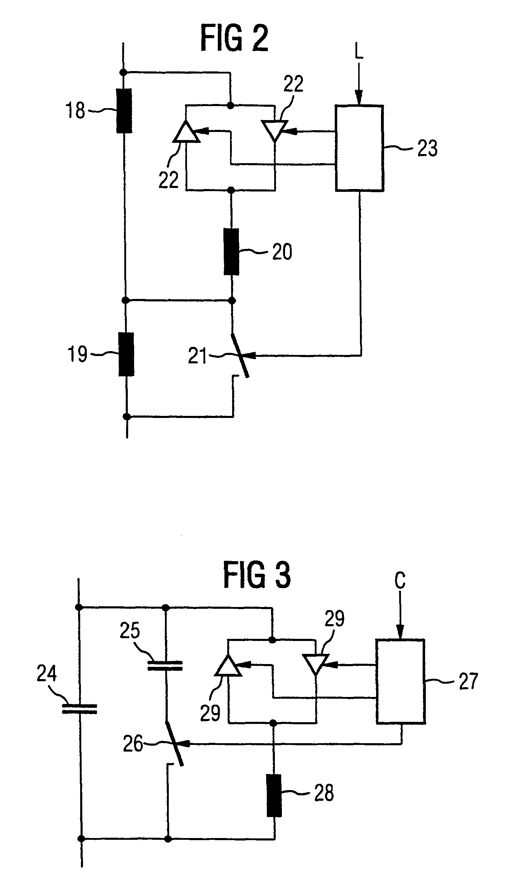

Die kapazitive Last 16 und die induktive Last 17 sind variabel. Eine Möglichkeit zur Realisierung einer variablen induktiven Last 17 ist in Fig. 2 dargestellt, eine Möglichkeit zur Realisierung einer variablen kapazitiven Last 16 in Fig. 3.

Gemäß Fig. 2 besteht die induktive Last 17 aus einer induktiven Grundlast 18, einer ersten induktiven Zusatzlast 19 und einer zweiten induktiven Zusatzlast 20. Sofern die induktive Last 17 an den zweiten Transformator 6 angeschaltet ist, ist die induktive Grundlast 18 stets wirksam. Die erste induktive Zusatzlast 19 hingegen ist nur dann wirksam, wenn ein Schalter 21 geöffnet wird. Durch das Betätigen des Schalters 21 kann die induktive Last 17 in einer Stufe variiert werden.

Der zweiten induktiven Zusatzlast 20 ist eine Thyristoreinheit 22 zugeordnet. Mittels einer Phasenanschnittssteuerung der Thyristoreinheit 22 kann die induktive Zusatzlast 20 und damit auch die induktive Last 17 kontinuierlich variiert werden. Durch Vorgabe einer Induktivitätswerts L an ein Steuergerät 23, das den Schalter 21 und die Thyristoreinheit 22 ansteuern kann, kann somit die induktive Last 17 in weiten Grenzen variiert werden.

Das Variieren der kapazitiven Last 16 erfolgt auf ähnliche Weise. Gemäß Fig. 3 besteht die kapazitive Last 16 aus einer kapazitiven Grundlast 24 und einer kapazitiven Zusatzlast 25. Die kapazitive Zusatzlast 25 ist mittels eines Schalters 26 der kapazitiven Grundlast 24 zuschaltbar. Der Schalter 26 wird von einem Steuergerät 27 angesteuert. Durch Zuschalten der kapazitiven Zusatzlast 25 kann die kapazitive Last 16 in einer Stufe variiert werden.

Der kapazitiven Grundlast 24 ist ferner eine induktive Zusatzlast 28 parallelgeschaltet, der wiederum eine Thyristoreinheit 29 zugeordnet ist. Mittels einer Phasenanschnittssteuerung der Thyristoreinheit 29, die ebenfalls vom Steuergerät 27 vorgenommen wird, kann wieder die induktive Zusatzlast 28 und somit im Ergebnis die kapazitive Last 16 kontinuierlich variiert werden. Somit muß dem Steuergerät 27 lediglich ein Kapazitätswert C vorgegeben werden, so daß das Steuergerät 27 die Thyristoreinheit 29 und den Schalter 26 entsprechend ansteuern kann.

In den Fig. 2 und 3 sind Lasten 16, 17 dargestellt, die in einer Stufe und zusätzlich kontinuierlich variabel sind. Selbstverständlich könnten auch andere Kombinationen verwendet werden, beispielsweise eine Variabilität der Lasten 16, 17 in mehreren Stufen oder nur kontinuierlich. Auch feste, nicht variable Lasten 16, 17 sind denkbar. Weiterhin kann die induktive zusatzlast 20 bzw. 28 gegebenenfalls auch in Serie mit der induktiven Grundlast 18 bzw. kapazitiven Grundlast 24 angeordnet sein.

Wenn die Lasten 16, 17 variabel sind, ist eine vollständige Symmetrierung der Netzbelastung möglich, wenn in beiden Streckenabschnitten 1, 2 die gleiche Wirklast benötigt wird.

Auch bei Belastung nur eines Streckenabschnitts 1, 2 wird eine Reduktion der Unsymmetrie erreicht. Bei Verwendung von festen oder in Stufen variablen Lasten 16, 17 wird die Unsymmetrie in etwa in dem gleichen Ausmaß verringert, die sich bei Transformator-Sonderschaltungen ergibt. Die Kosten für die Lasten 16, 17 sind jedoch wesentlich geringer als die bei einer Verwendung von Sonder-Transformatoren verursachten Kosten.

Weitere Vorteile des erfindungsgemäßen Unterwerks 4 sind, daß auch bestehende Unterwerke 4 mit den Lasten 16, 17 nachrüstbar sind und daß die Lasten auf der Mittelspannungsebene, also im Bereich von 15 kV bzw. 25 kV, eingesetzt werden können.

## Patentansprüche

1. Unterwerk zur Speisung eines ersten und eines zweiten Streckenabschnitts (1, 2) eines elektrifizierten Eisenbahnnetzes mit elektrischer Energie aus einem Drehstromnetz (8) mit drei Phasen über einen ersten und einen zweiten Transformator (5, 6) mit Primär- und Sekundärseiten (5', 5", 6', 6"), wobei der erste und der zweite Streckenabschnitt (1, 2) elektrisch voneinander isoliert sind, wobei die Primärseite (5') des ersten Transformators (5) an die erste und die zweite Phase des Drehstromnetzes (8) und die Primärseite (6') des zweiten Transformators (6) an die zweite und die dritte Phase des Drehstromnetzes (8) anschaltbar sind, wobei die Sekundärseite (5") des ersten Transformators (5) an den ersten Streckenabschnitt (1) und die Sekundärseite (6") des zweiten Transformators (6) an den zweiten Streckenabschnitt (2) anschaltbar sind, wobei die Sekundärseiten (5", 6") der Transformatoren (5, 6) einen gemeinsamen Erdungspunkt (14) aufweisen, wobei an den ersten Transformator (5) eine kapazitive Last (16) und an den zweiten Transformator (6) eine induktive Last (17) anschaltbar ist, **dadurch gekennzeichnet, dass** die kapazitive Last (16) und die induktive Last (17) an den Transformatoren (5, 6) sekundärseitig angeordnet sind, dass die kapazitive Last (16) und die induktive Last (17) variabel sind und dass die Lasten (16, 17) zum Ausgleich unsymmetrischer Belastungen des Drehstromnetzes an die Transformatoren (5, 6) anschaltbar sind.

2. Unterwerk nach Anspruch 1, **dadurch gekennzeichnet, dass** die induktive Last (17) in Stufen variabel ist.

3. Unterwerk nach Anspruch 1, **dadurch gekennzeichnet, dass** die induktive Last (17) kontinuierlich variabel ist.

4. Unterwerk nach Anspruch 3, **dadurch gekennzeichnet, dass** die induktive Last (17) mittels einer Phasenanschnittssteuerung einer der induktiven Last (17) zugeordneten Thyristoreinheit (22) kontinuierlich variabel ist.

5. Unterwerk nach einem der Ansprüche 1 bis 4, **dadurch gekennzeichnet, dass** die kapazitive Last (16) in Stufen variabel ist.

6. Unterwerk nach einem der Ansprüche 1 bis 4, **dadurch gekennzeichnet, dass** die kapazitive Last (16) kontinuierlich variabel ist.

7. Unterwerk nach Anspruch 6, **dadurch gekennzeichnet, dass** die kapazitive Last (16) mittels einer Phasenanschnittssteuerung einer der kapazitiven Last (16) zugeordneten Thyristoreinheit (29) kontinuierlich variabel ist.

8. Unterwerk nach einem der Ansprüche 1 bis 7, **dadurch gekennzeichnet, dass** die kapazitive Last (16) aus einer kapazitiven Grundlast (24, 25) und einer parallel oder in Serie zur kapazitiven Grundlast (24, 25) angeordneten induktiven Zusatzlast (28) besteht, dass die kapazitive Grundlast (24, 25) invariabel oder nur in Stufen variabel ist und dass die kapazitive Last (16) durch Variieren der induktiven Zusatzlast (28) kontinuierlich variabel ist.

## Claims

1. Substation for feeding a first and a second rail section (1, 2) of an electrified railway network with electrical power from a three-phase power supply system (8) having three phases via a first and a second transformer (5, 6) with primaries and secondaries (5', 5", 6', 6"), with the first and the second rail section (1, 2) being electrically isolated from one another, in which the primary (5') of the first transformer (5) can be connected to the first and the second phase of the three-phase power supply system (8), and the primary (6') of the second transformer (6) connected to the second and the third phase of the three-phase power supply system (8), in which case the secondary (5") of the first transformer (5) can be connected to the first rail section (1) and the secondary (6") of the second transformer (6) can be connected to the second rail section (2), in which case the secondaries (5", 6") of the transformers (5, 6) have a common earthing point (14), in which case a capacitive load (16) can be connected to the first transformer (5) and an inductive load (17) can be connected to the second transformer (5, 6) **characterized in that** the capacitive load (16) and the inductive load (17) are arranged on the secondary sides of the transformers (5, 6) **in that** the capacitive load (16) and the inductive load (17) are variable, and **in that** the loads (16, 17) can be connected to the transformers (5, 6) in order to balance unbalanced loads on the three-phase power supply system.

2. Substation according to Claim 1, **characterized in that** the inductive load (17) can be varied in steps.

3. Substation according to Claim 1, **characterized in that** the inductive load (17) is continuously variable.

4. Substation according to Claim 3, **characterized in that** the inductive load (17) can be varied continuously by means of phase-gating control of a thyristor unit (22) associated with the inductive load (17).

5. Substation according to one of Claims 1 to 4, **characterized in that** the capacitive load (16) can be varied in steps.

6. Substation according to one of Claims 1 to 4, **characterized in that** the capacitive load (16) is continuously variable.

7. Substation according to Claim 6, **characterized in that** the capacitive load (16) can be varied continuously by means of phase-gating control of a thyristor unit (29) associated with the inductive load (16).

8. Substation according to one of Claims 1 to 7, **characterized in that** the capacitive load (16) comprises a capacitive basic load (24, 25) and an inductive additional load (28) which is arranged in parallel or in series with the capacitive basic load (24, 25), **in that** the capacitive basic load (24, 25) cannot be varied or can be varied only in steps, and **in that** the capacitive load (16) can be varied continuously by variation of the inductive additional load (28).

## Revendications

1. Sous-station d'alimentation d'une première et d'une deuxième section ( 1, 2 ) d'un réseau électrifié de chemin de fer en énergie électrique à partir d'un réseau ( 8 ) triphasé ayant trois phases par un premier et un deuxième transformateur ( 5, 6 ) ayant des côtés ( 5', 5", 6', 6") primaire et secondaire, la première et la deuxième section ( 1, 2 )étant isolées électriquement l'une de l'autre, le côté ( 5' ) primaire du premier transformateur ( 5 ) pouvant être raccordé à la première et à la deuxième phase du réseau ( 8 ) triphasé et le côté ( 6' ) primaire du deuxième transformateur ( 6 ) pouvant être raccordé à la deuxième et à la troisième phase du réseau ( 8 ) triphasé, dans laquelle le côté ( 5" ) secondaire du premier transformateur ( 5 ) peut être raccordé à la première section ( 1 ) et le côté ( 6" ) secondaire du deuxième transformateur ( 6 ) peut être raccordé à la deuxième section ( 2 ), les côtés ( 5", 6" ) secondaires des transformateurs ( 5, 6 ) ayant un point ( 14 ) de terre commun, dans lequel au premier transformateur ( 5 ) peut être raccordée une charge ( 16 ) capacitive et au deuxième transformateur ( 6 ) peut être raccordée une charge ( 17 ) inductive, **caractérisée en ce que** la charge ( 16 ) capacitive et la charge ( 17 ) inductive sont disposées du côté secondaire sur les transformateurs ( 5, 6 ), **en ce que** la charge ( 16 ) capacitive et la charge ( 17 ) inductive sont variables, et **en ce que** les charges ( 16, 17 ) peuvent, pour compenser des charges déséquilibrées du réseau polyphasé, être raccordées aux transformateurs ( 5, 6 ).

2. Sous-station suivant la revendication 1, **caractérisée en ce que** la charge ( 17 ) inductive est variable par paliers.

3. Sous-station suivant la revendication 1, **caractérisée en ce que** la charge ( 17 ) inductive est variable de façon continue.

4. Sous-station suivant la revendication 3, **caractérisée en ce que** la charge ( 17 ) inductive est variable de manière continue au moyen d'une commande par coupe d'une unité ( 22 ) de thyristor associée à la charge ( 17 ) inductive.

5. Sous-station suivant l'une des revendications 1 à 4, **caractérisée en ce que** la charge ( 16 ) capacitive est variable par paliers.

6. Sous-station suivant l'une des revendications 1 à 4, **caractérisée en ce que** la charge ( 16 ) capacitive est variable en continu.

7. Sous-station suivant la revendication 6, **caractérisée en ce que** la charge ( 16 ) capacitive est variable de manière continue au moyen d'une commande par coupe d'une unité ( 29 ) de thyristor associée à la charge ( 16 ) capacitive.

8. Sous-station suivant l'une des revendications 1 à 7, **caractérisée en ce que** la charge ( 16 ) capacitive est constituée d'une charge ( 24, 25 ) capacitive de base et d'une charge ( 28 ) inductive supplémentaire montée en parallèle ou en série avec la charge ( 24, 25 ) capacitive de base, **en ce que** la charge ( 24, 25 ) capacitive de base est invariable ou ne varie que par paliers, et **en ce que** la charge ( 16 ) capacitive est variable en continu par variation de la charge ( 28 ) inductive supplémentaire.
